(19) Europäisches Patentamt
European Patent Office
Office européen des brevets

(11) **EP 3 957 292 A1**

(12) **EUROPEAN PATENT APPLICATION**

(43) Date of publication:
**23.02.2022 Bulletin 2022/08**

(21) Application number: **20382762.1**

(22) Date of filing: **21.08.2020**

(51) International Patent Classification (IPC):
***A61H 3/02*** (2006.01)   ***A45B 3/00*** (2006.01)
***G01C 19/30*** (2006.01)

(52) Cooperative Patent Classification (CPC):
**A61H 3/02; A45B 3/00; G01C 19/30;** A61H 3/0244;
A61H 2201/0173; A61H 2201/018; A61H 2201/50;
A61H 2201/5028; A61H 2201/5058;
A61H 2201/5061; A61H 2201/5064;
A61H 2201/5084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GLOBAL PALDOR S.L.**
**08009 Barcelona (ES)**

(72) Inventors:
• **MONFORT FAURE, Jordi**
**08009 BARCELONA (ES)**
• **BERNARD NOAILLY, Jérôme**
**08009 BARCELONA (ES)**

(74) Representative: **Ponti & Partners, S.L.P**
**C. de Consell de Cent 322**
**08007 Barcelona (ES)**

(54) **GAIT-ASSISTING STICK**

(57)    The present invention relates to a gait-assisting stick (10) for assisting a user to lift the stick towards a vertical orientation when it is undesirably tilted with respect to the horizontal plane (or to the gravity field).

The gait-assisting stick (10) mainly comprises: an elongated member; an inclination detection system (23) comprising a first gyroscopic system for the detection of, at least, the inclination of the stick with respect to the horizontal plane (or to the gravity field); a stabilizing system (22) comprising a second gyroscopic system including, at least, a stabilizing gyroscope having a spinning rotor (14) with its spin axis (15) that can be reoriented according to the detected inclination; and a control system for receiving orientation signals from the inclination detection system (23) according to the current tilt of the stick (10) with respect to the horizontal plane (or to the gravity field) and sending displacement or corresponding force signals to the stabilizing system (22).

FIG. 6

EP 3 957 292 A1

## Description

## Field of the invention:

The present invention relates to gait-assisting sticks for assisting a user to lift the stick towards a vertical orientation when it is undesirably tilted with respect to the horizontal plane (or to the gravity field). More particularly, this invention relates to an active system to assist a stick lifting and up straight reorientation, wherein this active system can be incorporated in a gait-assisting stick, walking stick, crutch or any other type of devices for assisting the gait of a user.

## Background of the invention:

Regarding gait-assisting devices, traditional walking aids like walking stick or canes and crutches are well-known in the art.

A walking stick or cane is a device used primarily to aid walking, provide postural stability or support, or assist in maintaining a good posture. Walking sticks or canes are being used since thousands of years to assist human gait. Though shapes and materials (generally being wood or aluminium) have evolved according to specific applications (typically paramedical or sport). The concept remains the one of an elongated (semi) rigid support that passively resists mechanical loads strictly applied along its longitudinal axis. The superior part is firmly grabbed by the user and the lower end can be lifted or in contact with the ground, offering no resistance to rotations around any horizontal axis. They are lightweight and inexpensive.

A crutch is a support for the human body designed for the purpose of assisting ambulation when one of the lower extremities requires additional support during displacement, commonly when the human being suffers from some type of difficulty walking. Crutches must be strong enough to support the weight of the body, and can be made of different materials, such as wood, metal, or other material.

The traditional walking stick or canes (i.e. the ones with only one leg) are useful for patients that need just an additional point of contact with the floor for balance with little or no weight bearing needed, therefore, increasing the base of support.

However, when they are intended to use to assist the gait of elders or any persons with physical limitations, such a lack of resistance to rotations at the ground has serious implications. It implies that maximum mechanical stability of the support is solely achieved when the longitudinal axis of the stick and the force applied by the user are strictly perpendicular to the ground (i.e. aligned with the gravity field when the ground is horizontal). Hence, the user must compensate the lack of mechanical stability off-axis through muscle strength, involving different parts of the body, to maximize both the longitudinal force and the torque at the upper extremity of the stick, for example grabbed by the hand of the user.

Such additional effort might demotivate the user to walk with a stick or crutch, and increased sedentarism (e.g. staying at home) or alternative passive locomotion (e.g. electric wheelchair) might be preferred. In any case, the reduction of physical activity increases the risks of comorbidities (overweight, type II diabetes, cardiovascular disorders, muscle weakness, bone fragility, among others) or the deleterious impact of already present comorbidities.

Traditional walking stick or canes and crutches have only undergone slight modifications regarding the lightness of the materials or the methods of height adjustment. Consequently, the use of this type of device is sometimes difficult for older people since the latter often lack enough strength in their arms and forearms, as their balance worsens over the years. The logical consequence of the problems in the use of current walking aids are falls, fractures, tendonitis and soft tissue injuries, which very often discourage or prevent their use.

Accordingly, it is essential to provide a human gait-assisting stick with improved off-axis mechanical stability, without increasing the need for muscle strength. Since the quasi-static equilibrium of forces and the mechanical energy need to be preserved, an active system is required, to alleviate extra efforts by the body generated by the use of traditional passive sticks.

Some attempts have been made to increase the stability of the traditional passive canes by providing, for example, multiple-legged canes. This type of canes includes generally four legs fixed at the bottom of the stick. This cane permits more weight bearing, increases base of support and provides more stability for the patient when comparing with the traditional single-leg canes. While it has the advantage that it also stands by itself freeing the user to use his or her hands, it must be in contact with the floor during gait to provide stability which hinders fast gait. It is also not suitable for stair climbing. Therefore, his stability is not complete, and it is also subject to lateral forces which destabilizes the stick.

Other gait-assisting devices that target robotic exoskeletons, mostly for paraplegic patients or patient with heavy neuro-motor impairments, are also known. However, they are suitable as professional equipment to provide addition strength to users with heavy physical activity, or for gait restoration in the case of complete or heavy impairment. Hence, they are simply not suitable for people who only require a comfortable gait assistance. These users of the present invention are actually not the users targeted by the exoskeleton technology. Furthermore, they are invasive and relatively expensive.

U.S. patent no. US20030089389A1 describes a walking cane which substantially maintains its position despite attempts to move or deflect the cane. The walking can includes an elongated, longitudinally extending member having a first end and a second end, the first end being shaped and dimensioned for engaging a support surface and the second end being shaped and dimensioned for gripping by an individual using the present walking cane. The walking cane further includes a gyroscope integrally associated with the longitudinally extending member. The gyroscope is selectively rotated to generate angular momentum substantially preventing movement or deflection of the cane from a desired orientation. However, this invention does not operate properly since it only uses a single gyroscope and this gyroscope is placed in the upper part of the stick, being such placement suboptimal according to meet the ultimate goal.

It is, therefore, the goal of the present invention to provide an active stick per-se, able to provide more stability to assist gait and also help to lift and reorient the stick towards a vertical orientation when tilted with respect to the horizontal plane (or to the gravity field), once it is handled by a user.

**Summary of the invention:**

The first object of the present invention is to provide a gait-assisting stick for helping to lift the stick towards a vertical orientation when tilted with respect to the horizontal plane (or to the gravity field), which solves the aforementioned drawbacks and gives the advantages described below.

For this first purpose, the present invention concerns a gait-assisting stick comprising, at least:

- an elongated member extending along a longitudinal direction, having an upper end and a lower end, wherein a portion disposed at the lower region of the elongated member is configured and dimensioned for receiving, at least, a stabilizing system;
- an inclination detection system, comprising a first gyroscopic system, for the detection of, at least, the inclination of the stick with respect to the horizontal plane (or to the gravity field);
- a stabilizing system, comprising a second gyroscopic system including, at least, a stabilizing gyroscope having a spinning rotor with its spin axis that can be reoriented according to the detected inclination, wherein the stabilizing system is disposed at the lower region of the elongated member, and wherein the stabilizing system is configured for receiving specific displacements or corresponding forces from a control system connected to the stabilizing gyroscope, which tilts the spin axis and the rotor of the stabilizing gyroscope to a specific inclination with respect to the horizontal plane, which generates an additional torque ($\tau$) and an additional angular momentum (L) that further imposes a controlled gyroscopic precession ($\omega_p$) that forces the vertical reorientation of the stick from its lower region, to maximize the lever arm effect at the upper end of the stick; and
- a control system for connecting electronically the mechanical induction of the imposed precession in the stabilizing system with the inclination detection system and for receiving orientation signals from the inclination detection system according to the current tilt of the stick with respect to the horizontal plane (or to the gravity field) and sending displacement or corresponding force signals to the stabilizing system.

The recited stabilizing gyroscope is advantageously used to stabilize the stick and it is based on the gyroscopic phenomenon. This phenomenon is produced when a rotating rotor (e.g. a rotor) generates an angular momentum (L) alignes with the spin axis and a global rotation precession ($\omega_p$) appears in a different plane, acording to the torque ($\tau$) generated by an external force ($F_X$, $F_Y$) exerted on the spin axis.

More specifically, the stabilizing gyroscope operates in the following way: when a rotor with a moment of inertia (*I*) (tensor quantity) is kept in rotation around an axis with an angular rotation $\vec{\omega}$, it produces an angular momentum ($\vec{L}$), that aligns with the axis of rotation:

$$\vec{L} = I\vec{\omega} \qquad (1)$$

where *I* is the moment of inertia of the rotor (cylindrical with a radius, *r*, and a rotor, *m*):

$$I = \frac{1}{2}mr^2 \qquad (2)$$

$\vec{L}$ sands for a quantity of movement aligned with the spin axis, normal to the tangential velocity of the rotor.

If an external force, $\vec{F}$, oblique to the rotation axis, is applied to tilt the rotating system, a torque, $\vec{\tau}$, is generated and provokes a change, $\vec{dL}$, in the direction of the angular momentum, $\vec{L}$, so that:

$$\vec{L'} = \vec{L} + \vec{dL} = \vec{L} + \vec{\tau}dt \qquad (3)$$

The reorientation of the angular momentum from $\vec{L}$ to $\vec{L'}$ generates a secondary rotation of the system ($\vec{\omega_p}$) called precession.

The magnitude of the aforementioned torques is regulated in real time, according to the current tilt of the stick with respect to the horizontal plane (or to the gravity field).

The surprising effect achieved by the stabilizing gyroscope is that the active and controlled tilt of the rotating gyroscopic system is therefore cornerstone to generate stabilizing torques that will force a desired reorientation of the system through precession. Because the stabilizing system is fastened to the stick, the precession physical phenomena (i.e. a change in the orientation of the spin axis of the rotating rotor) helps reorienting the stick.

In reference to the elongated member, which constitute the body of the stick, it is preferably a semi-rigid element, made of polymeric, metallic material or wood among other possible materials. As a preferred material a fiber-reinforced composite or aluminium may be selected. The cross-section of its body may be circular or any other shape. Optionally, the rod or the elongated member may be telescopic (e.g. where one extension tube slides into another), to adjust the longitudinal dimensions to the height of the user. Also, optionally, the body of the stick may be partially solid and hollow or totally hollow inside. In the hollow parts of the body, the components are disposed. Preferably, the elongated member extends rectilinearly along a first longitudinal direction, but it may also include other adjacent portions which may be curved or bended in respect to the first longitudinal direction.

Regarding the stabilizing gyroscope of the stabilizing system, it shall be understood as a mechanical gyroscope. A mechanical gyroscope essentially consists of a spinning mass (or a rotor) that rotates around its spin axis. The axis of rotation is also called spin axis. Both terms may be used interchangeably. Likewise, spinning mass or rotor may also be used interchangeably. Regarding the rotor of the stabilizing gyroscope, in the present invention, it may be understood as a spinning wheel or a disc. The rotor may be made, for example, of carbon fiber. The preferred shape of the rotor is cylindrical with a central axis. The rotor may have the sufficient dimensions to be encased inside a housing in the elongated element without significantly increasing the diameter of the stick. While a conventional cylindrical-shaped mass is disclosed here, in accordance with a preferred embodiment of the invention, other gyroscope mass configurations and/or shapes may also be used as long as the axial symmetry of the gyroscope around the spinning axis is preserved, such as an elliptically shaped. Preferably, the rotor is made of a material of high density to optimize the ratio mass /seize.

According to a preferred embodiment of the stabilizing system, it may comprise, at least:

- a stabilizing gyroscope (i.e. the rotor that rotates around its spin axis and said spin axis) being disposed inside an articulated frame, wherein the axis of rotation (also called spin axis) of the stabilizing gyroscope follows the deformation imposed to the frame, wherein the spin axis is fully centered within the articulated frame, so that the spin axis is always kept aligned with the side edges of the articulated frame, both in the deformed and undeformed configurations of the frame;
- an articulated frame with rotating bearings, wherein the articulated frame is configured for, under the action of different displacements or corresponding reaction forces, adopting distorted shape, wherein the top and bottom surfaces of the volume enclosed in the frame remain parallel to the horizontal plan, therefore acquiring shapes that impose rotations of the rotor and the spin axis of the stabilizing gyroscope;
- one or more servomotors for transmitting a specific movement or corresponding force to a plurality of mandibles depending on the input signals received from the control system;
- a plurality of mobile mandibles, each one with two opposed legs in contact with the upper part of the frame, which are able to move the upper edges of the frame to generate the desired distorted shape and, therefore, orientation of the stabilizing gyroscope, according to a specific displacement or corresponding force control; and
- elements for activating the fast spinning of the rotor.

Preferably, in this invention, a one-mass stabilizing gyroscope is used. However, a set of aligned and synchronized gyroscopes may be used, to the extent that optimal miniaturization is achieved.

Regarding the elements for activating the spin of the rotor, these may operate, for example, by electromagnetic forces, and are mounted either around the rotor or around the spin axis itself. In case the elements for activating the spin are assembled around the spin axis the stabilizing system is less mechanically efficient, but it has a great space saving. These elements for activating or powering the spin of the rotor are configured to always power the spin of the rotor. However, in another embodiment of the invention, these elements may be configured to automatically switch on and off the spin of the rotor depending on the current orientation of the stick or other parameters of the stick. For example, when the stick is positioned in a vertical orientation or when it is grabbed by a user (i.e. it is in a working position), the fast spin of the rotor starts meanwhile this situation is maintained. And when the stick is not being used, the rotor is stopped (by means of a manual button activated by the user or automatically).

Preferably, the system that moves the mandibles and the bottom edges of the articulated frame are connected to a system that ensures, at least, a rigid body motion that follows the motion of the elongated member of the stick.

Preferably, the stabilizing gyroscope can be reoriented in the horizontal plane, i.e. in the "X" and "Y" directions but maintaining the "Z" position.

In reference to the plurality of mobile mandibles of the stabilizing gyroscope system, it may be preferably two perpendicular mobile mandible, each of them having two opposed legs, wherein each leg is disposed on each of the lateral faces of the articulated frame, in aligned positions. They are also preferably disposed in a position ($Z_i$) in the Z axis near the upper base of the frame. The plurality of mandibles operates in such a manner that in a neutral position, they support the articulated frame (each leg being disposed on each of the lateral faces of the frame). If the plurality of mandibles does not support the articulated frame, the articulated frame would deform

under the effect of gravity since the ball joints themselves do not offer any resistance to the deformation of the frame.

In reference to the articulated frame, it is a 3D structure constituted by a plurality of elongated elements which are connected and articulated among each other, and are forming the sides of the articulated frame, wherein the articulations among the elongated elements comprise rotating bearings, such as ball joints, thus allowing the deformation of the articulated frame.

The mechanical components of the articulated are in relative motion and, therefore, subjected to friction, which in turn leads to measurement drifts over time. To minimize friction, high-precision rotating bearings and special lubricants are preferably used. For this reason, preferably low friction ball joints are used in this invention.

Also, preferably, said articulated frame has a cubic shape, wherein with all right angles and whose height, width and depth are all the same. The cube is the simplest geometric shape to achieve the desired function for the present invention. However, other functional polyhedral shapes are also possible, if they have six opposite faces, in pairs. For example, it could be an octahedron, or a rectangular parallelepiped (e.g. if there is an embodiment of the invention where the external profile of the stick at the level of the mechanism does not have symmetry of rotation around the longitudinal axis of the stick, i.e. it is more elongated in the anteroposterior direction - direction of travel - and thinner in the mediolateral direction so that the user does not hit the foot against the stick).

In this cubic embodiment, a respective vertex ball joint is placed in each of the eight edges of the frame. This vertex ball joint may be, for example, a one-cavity; however, other configurations are also possible. These one-cavity ball joints are configured to receive a respective spherical head placed each end of the four elongated elements placed vertically that form the exterior shape of the frame. In this preferred embodiment, a respective plate is provided in the upper and lower faces of the frame for supporting the respective ends of the axis. Furthermore, at the upper and lower end of the spin axis a respective ball joint (a spherical head) is also provided inside a one-cavity provided inside the center of each plate. Finally, in this embodiment, two different elements are also disposed in the upper face in the longitudinal direction "X", starting from the middle of a lateral element of the upper face to one lateral end of the upper plate. Both longitudinal elements are disposed aligned in the longitudinal direction "X". These two elements are articulated by means of respective ball joints disposed in each of their ends, wherein. The same applies for the transverse direction "Y", wherein four other ball joints are provided. Therefore, eight ball joints are placed, in total, in the upper face. The lower face of the frame, however, does not require said quantity of ball joints, but only one ball joint is required placed in the lower end of the spin axis.

Also, preferably, the plurality of elongated elements as well as the ball joints are made of a non-magnetic material, such as a polymeric or a metallic alloy, e.g. an aluminium alloy. The only exception are the upper and lower spherical heads of the spin axis of the stabilizing gyroscope which can be made of a magnetic material.

According to this preferred embodiment of the invention, the plurality of mobile mandibles are indirectly connected to the spin axis by means of the articulated frame, so that the tilt of the articulated frame drives the stabilizing gyroscope (i.e. rotor and spin axis).

In a second embodiment of the present invention, the gyroscope might be mounted on flexible posts (rubber material) that could deform under the coordinated action of axial actuators and reorient the gyroscope, without any need of an articulated frame.

In a third embodiment of the present invention, the stabilizing gyroscope can also be floating in a fluid, its equilibrium orientation being perturbed in a controlled way by actuators or mandibles.

In reference to the one or more servomotors, according to a preferred embodiment of the invention, one servomotor per each mandible (i.e. two different servomotors) is provided, in order to cover the set of necessary deformations of the frame in the horizontal plane. A servomotor is a type of motor whose output shaft can be moved to a specific angular position by sending it a coded signal. The servomotor maintains the position of the shaft as long as you keep applying the coded signal and when the coded signal is changed, the angular position of the shaft changes.

Preferably, all the stabilizing system components are integrally disposed within the lowest region of the elongated member, or around mid-height whenever convenient and depending on the dimensions of the stick. In this invention, the lowest region of the elongated member must be understood as the lower half of the stick or the lowest region as allowed by the dimensions of the stick and of the stabilizing system.

In a preferred embodiment of the invention, the stabilizing system is housed within a small housing chamber integrally formed in the inner part of the lowest region of the elongated member. Said housing chamber is shaped and dimensioned to provide a safe space for the stabilizing system within the elongated member. The housing chamber may have a great diameter in respect to the elongated member diameter. This enlargement may be preferably symmetric around the axis of the stick. However, non-symmetric housing solutions, with zero enlargement in the medial direction, according to the user are also possible. In any case, the enlargement is minimal.

In reference to the inclination detection system, it may comprise, at least, a miniature system of gyroscopes for the detection of current inclination of the stick. The inclination detection system sends orientation signals, which may be e.g. electrical orientation signals, to the control system, e.g. through bobbin resistor or piezo.

Additionally, the inclination detection system may comprise one or more accelerometers for the detection of the acceleration of the stick. In this second embodiment, the inclination detection system further sends acceleration signals, which may be e.g. electrical orientation signals, to the control system.

An accelerometer is based in the fact that by determining an object's acceleration and integrating over time, the velocity of the object can be calculated. Integrating again, position can be determined. The simplest accelerometer is a weight that is free to move horizontally, which is attached to a spring and a device to measure the tension in the spring. This can be improved by introducing a counteracting force to push the weight back and to measure the force needed to prevent the weight from moving. A more complicated design may consist of a gyroscope with a weight on one of the axes. The device will react to the force generated by the weight when it is accelerated, by integrating that force to produce a velocity.

Preferably, all the inclination detection system components are integrally disposed inside an upper region of the elongated member. In this invention, the upper region of the elongated member must be understood as the upper half of the stick, or the uppermost region as allowed by the dimensions of the stick and of the stabilizing system.

Preferably, the control system is disposed inside the lower part disposed near the lower end of the elongated member. However, it may also be in any other part of the interior of the elongated member, since it has a very small size.

According to a preferred embodiment of the invention, all the elements which are part of the of the stick of the present invention except the elongated member (i.e. inclination detection gyroscope system, stabilizing gyroscope system, controller and) are preferably fully embedded in the same or different parts of the interior of the body of the elongated member. Alternatively, all or some of them may be located externally coupled to the elongated member.

The technical advantages that the present invention provides with respect to other already known devices are the followings:

- Dynamic stabilization of the stick in any direction oblique to the horizontal plane, thanks to the coupled system of gyroscopes where the measurement gyroscope decides on the 3D orientation of the rotating axis of the stabilizing gyroscope through the control of articulated frames.
- System effective for both balance and gait assistance thanks to real-time detection of the stick orientation with respect to the horizontal plane (measurement gyroscope) and real-time servo control (i. e. servomotors with perpendicular axes) of the orientation of the stabilizing gyroscope.
- Relatively lightweight system and fully embedded in the body of the stick, at the lower end, so very comfortable for the user.
- Strength of the stabilization regulable through the control of the angular rotation of the rotor of the stabilising gyroscope.
- Easy to be manufacture.
- Suitable for vast consumers.

The gait-assisting stick described above may be integrated in other elements, such as a walking stick or cane, crutches, walkers, four-leg walking sticks, trail sticks (it will help to ease hiking an trekking activities), ski poles (they will help to get the balance right when skiing), Nordic walking poles or umbrella holding sticks, among other devices.

Therefore, a second object of the present invention is a walking stick or also called cane, comprising the gait-assisting stick described above, wherein the upper end of the elongated member is shaped and dimensioned for gripping by an user using the present walking stick. When we refer to a walking stick or a cane, it has to be understood in this invention a device used primarily to aid walking, provide postural stability or support, or assist in maintaining a good posture. The walking stick or cane may include, apart from the stick of the invention, a grip or handle in the upper part and a tip in the lower part. The length of the walking stick or cane can be designed or adapted, depending on the size of the user and on the specific use case. For example, the proper configuration for a gait-assisting stick is when the following two conditions are met:

- Checking the elbow bend: With the cane in the hand, the elbow should bend at a comfortable angle, about 15 degrees. The user might bend her/his elbow slightly more if he/she is primarily using the cane for balance.
- Checking the wrist height: With your arm hanging straight down at the user's side, the top of her/his cane should line up with the crease in her/his wrist.

Also, another object of the present invention is a crutch, comprising the gait-assisting stick described above. When we refer to a crutch, it has to be understood in this invention a support for the human body designed for the purpose of assisting ambulation when one of the lower extremities requires additional support during displacement, commonly when the human being suffers from some type of difficulty walking. Crutches can be made of wood, metal, or other material. Although they have traditionally been made of wood, the use of aluminium is currently preferred due to its characteristics of lightness and resistance. In axillary crutches, the upper part serves to rest the armpit and is generally lined with a mattress so that it does not get hurt by the weight of the body. Also, in the middle part of the crutch it has a support for hands. Canadian canes are of the same material but the arm and forearm part are generally lined with plastic or PVC to improve support and prevent the patient from slipping on the upper support. All of them have a small rubber device at the bottom to improve support and prevent the crutch from slipping during movement. The size of the crutches is usually adjustable, so that they adapt to the height of the user. In general, the height adjustment is telescopic where one extension tube slides into another.

Another object of the present invention is a walker for stability, wherein one or more of its legs comprise the gait-assisting stick described above. A walker is a type of mobility aid used to help people who are still able to walk (e.g., don't require a wheelchair) yet need assistance. It is a four-legged frame that allows a person to lean on it for balance, support, and rest. Walkers are usually made of aluminium, so they are light enough to be picked up and moved relatively easily. They often have comfort grips made of foam, gel, or rubber to enhance the user's comfort. The tips of the legs are typically covered with rubber caps that are designed to prevent slipping and improve stability. Yet, the displacement of the walker by a user, often with weakened musculature, can be tedious, especially in present of obstacles on the ground, for example pavement borders. The integration of the gait-assisting stick of the invention in one or more of the legs of a walker will advantageously and dynamically support the lifting and the displacement of the walker by the user, thanks to the angular momentum effects.

Further another object of the present invention is a Nordic walking pole, or a trekking/hiking pole or a ski pole, wherein theses poles comprise the gait-assisting stick described above. The integration of the gait-assisting stick of the invention in a ski/trekking/hiking pole will also advantageously allow the dynamic stabilization of the pole in any direction oblique to the horizontal plane.

Finally, another object of the present invention is an umbrella, wherein the inferior stick of the umbrella comprises the gait-assisting stick described above. The integration of the gait-assisting stick of the invention in an umbrella will also advantageously permit the lifting and dynamic stabilization of the stick in any direction oblique to the horizontal plane, which will help users, especially subjects with weakened musculature, to hold the umbrella up straight with reduced efforts.

**Brief description of the drawings:**

The invention will now be described more fully with reference to an example of its embodiment, illustrated solely for guidance and without restrictive intent, in the attached drawings, in which:

Figure 1 shows a conventional concept of a walking stick or cane.

Figure 2 shows the general concept of a stick according to the present invention held by a user, wherein the stick is mechanically stabilized at its lower end by active forces.

Figure 3 shows a schematic perspective view of the different forces, momentums and toques involved in a gyroscopic.

Figure 4 shows a perspective view of a preferred embodiment of the main elements that constitute the stabilizing system of the invention, in a vertical (i.e. neutral) disposition.

Figure 5 shows the same perspective view of the embodiment shown in figure 4 but without the actuators and the servomotor, in the same vertical (i.e. neutral) disposition, and representing the action of external forces in the X and Y directions ($F_X$, $F_Y$).

Figure 6 shows a schematic view of the overall control of the stick mechanical stability of the present invention.

Figure 7 shows three different side views of some of the elements which form the stabilizing system of the invention shown in figure 5 in a vertical (i.e. neutral) disposition: a first side view in the Y-Z plane, a second side view in the X-Z plane and a third side view in the X-Y plane.

Figures 8 and 9 show two different cross-sectional views of some of the elements which form the stabilizing system of the invention of figure 5 (but in this case in an actively titled disposition in "-Y" direction): a first side view in the Y-Z plane and a second plant view in the X-Y plane.

Figures 10 and 11 show two different cross-sectional views of some of the elements which form the stabilizing system of the invention, shown in figure 5 (but in this case in another actively titled disposition in "-X" direction): a first side view in the Z-X plane and a second plant view in the X-Y plane.

Figure 12 shows a perspective view of a possible embodiment of the cubic frame in the vertical (i.e. neutral) disposition, including a possible configuration of the ball joints.

The drawings are not necessarily to scale. In certain instances, details that are not necessary for an understanding of the embodiments or that render other details difficult to perceive may have been omitted.

**Detailed description of the preferred embodiments:**

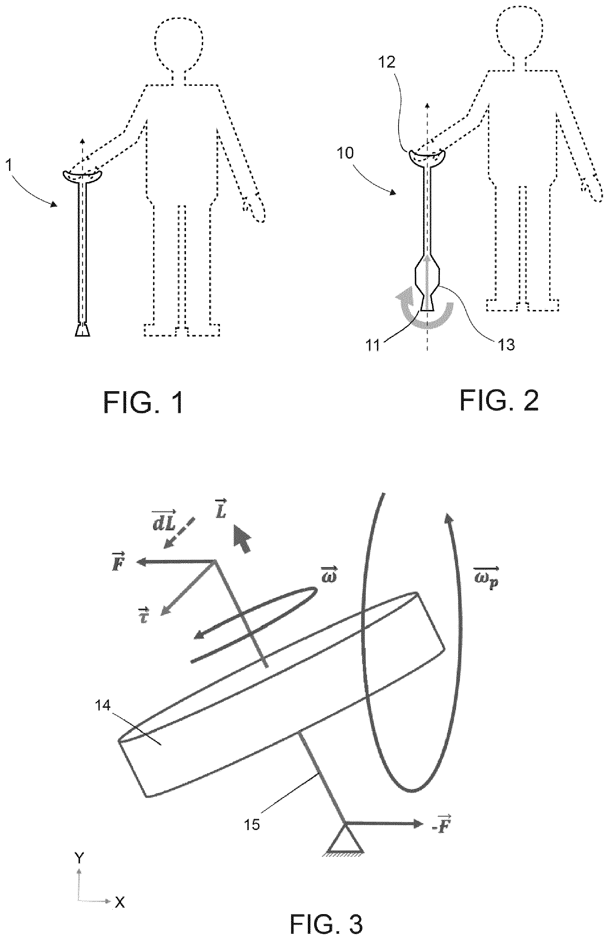

The traditional concept of a walking stick or cane (1) is represented in figure 1, wherein maximum stability is achieved when the force exerted by the user on the stick (1) is normal to the horizontal plane (represented by a dashed vector).

With reference to figure 2, the general concept of a gait-assisting stick (10) according to the present invention is shown. This gait-assisting improved stick (10) is configured by an elongated body which extends along a longitudinal direction and has an upper end (12) wherein a handle is provided and a lower end (11) having a tip. An enlarged portion (13) is located near the lower end (11) of the stick (10), which houses inside, at least, the stabilizing system. The gait-assisting stick (10) is mechanically stabilized at its lower end (11) by active forces, according to the present invention. The momentum ($\vec{L}$) is represented by a vertical row pointing up from the lower end, and the torque ($\vec{\tau}$) by a row rotating in a clockwise direction.

The gyroscopic effects performed in the two gyroscopes comprised in the gait-assisting stick (10) of the present invention is schematically represented in figure 3. In this figure a rotating rotor (14) which rotates around a spin axis (15) is depicted in a titled orientation to the left side with respect to the vertical axis "Y", due to the fact that an external force ($\vec{F}$) is exerted on the upper end of the spin axis (15). The rotating rotor (14), which spins rapidly, generates an angular momentum ($\vec{L}$) aligned with the spin axis (15) and at the same time a global rotation precession ($\vec{\omega_p}$) appears in a different plane, according to the torque ($\vec{\tau}$) generated by the external force ($\vec{F}$). The lower end of the spin axis (15) is a stationary pivot.

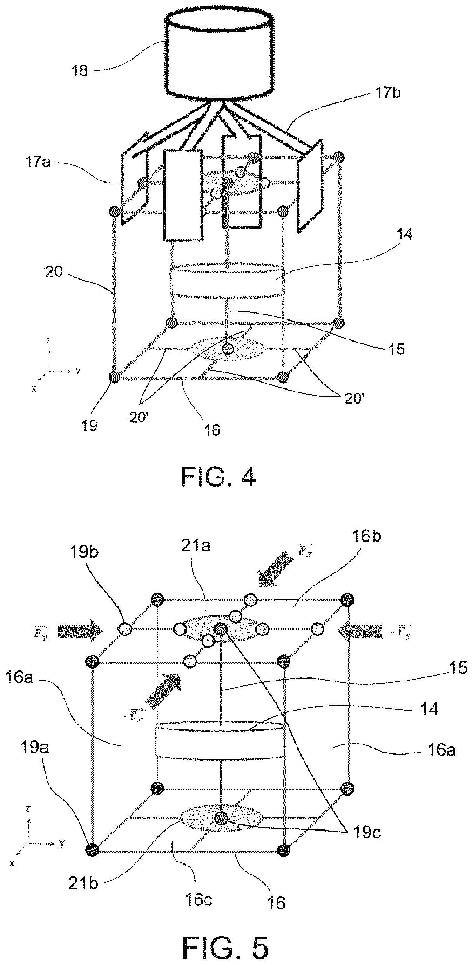

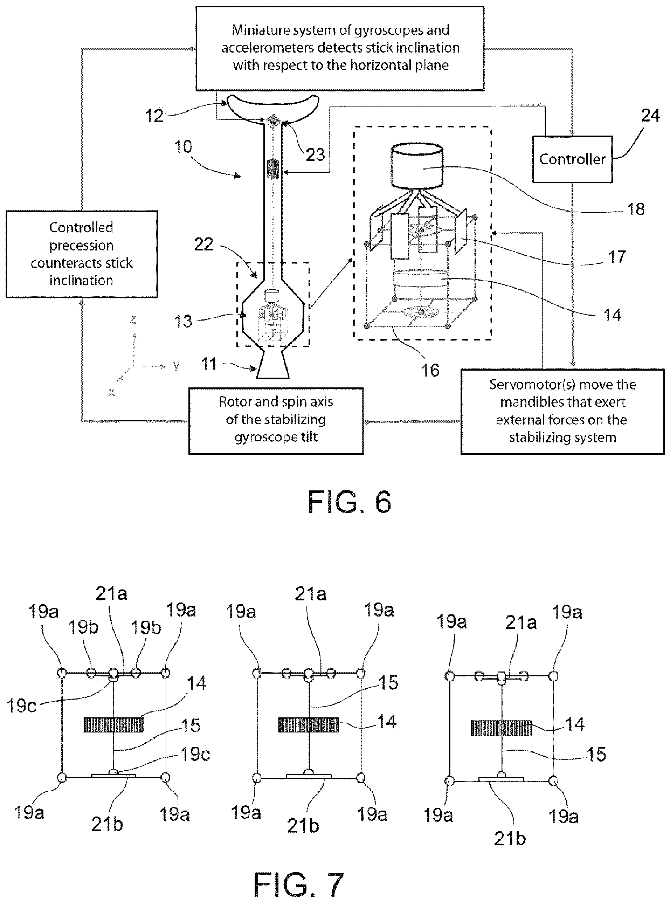

With reference to figure 4, the main components of the stabilizing system in a neutral (i.e. vertical) disposition of the gait-assisting stick (10) of the invention are shown. A cubic articulated frame (16) is represented, which is configured by twelve elongated thin rods (20), having the same length, and a ball joint (19) is provided connecting the rods (20) to allow rotation. This cubic frame (16) constitutes four imaginary lateral faces (16a), one imaginary upper face (16b) and one imaginary lower face (16c). Furthermore, in the upper and lower faces four other elongated thin elements (20') are disposed forming a cross. Two mobile mandibles (17) are provided, having, each one, two opposed legs (17b) which ends in a respective pushing element (17a), wherein these two mobile mandibles (17) are placed in transversal directions. Therefore, four pushing elements (17a) are disposed in the upper part of each lateral faces of the cubic frame (16). These two mobile mandibles (17) are extended upward to a servomotor (18), which transmits a specific angular movement to these two mandibles (17). In the enclosed volume inside the articulated frame (16) a stabilizing gyroscope is located. In particular, the spin axis (15) is attached in the centre of the inferior face by means of an articulated pivot and extends along the vertical direction "Z" (when the stick is in a vertical configuration) within the articulated frame (16) and ends in an articulation ball joint (19c) in the upper face (16b), so that the spin axis (15) always keeps aligned with the side faces (16a) of the articulated frame (16). The rotor (14) is fixed in an intermediate position of the spin axis (see figure 7). The inferior face (16c) of the articulated frame (16) is fixed and it is only the upper part of the articulated frame (16) that it is actively tilted by the mandibles (17). The elements for activating the spin of the rotor are not depicted in this figure 4.

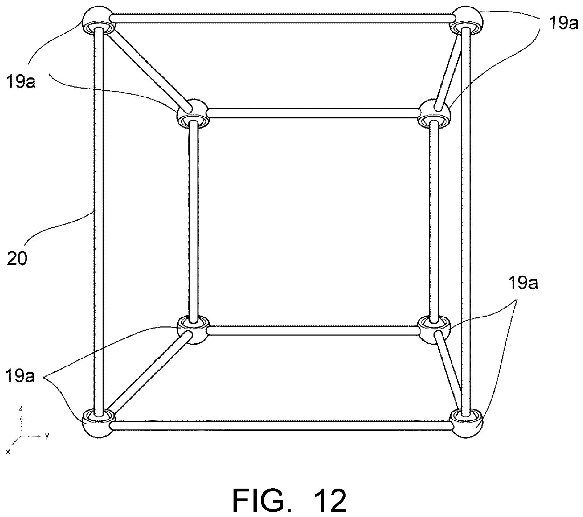

With reference to figure 5, all the elements of the stabilizing system except the servomotor (18) and the mandibles (17) in the same vertical disposition are shown. In this vertical (i.e. neutral) position, the cubic articulated frame (16) is not deformed, and the spin axis (15) and the rotor (14) are in a vertical orientation (see also the side view on figure 7). In this figure 5, the four possible reaction forces ($F_X$, -$F_X$, $F_Y$, -$F_Y$) that the pushing elements (17a) of the two mandibles can exert are represented: two possible reaction forces extending in the "X" direction (Fx, -Fx) and two possible reaction forces extending in the "Y" direction ($F_Y$, -$F_Y$). The system operates when one or more of the four pushing elements (17a) applies a specific reaction force ($F_X$, -$F_X$, $F_Y$, -$F_Y$) in its respective lateral face of the articulated frame (16), so deforming the articulated frame (16) accordingly to this or these force/s. With reference to figures 7 to 9, different views are shown in the same neutral configuration as figure 5. In reference to figures 4 and 5, the upper (21a) and lower supporting plates (21b) are represented. The different types of ball joint (19) are indicated in figure 5: eight one-cavity ball joints (19a) located in the intersections of the cube, eight one-cavity ball joints (19b) in the upper face (16b) and two one-cavity ball joints (19c), one in each plate (21a, 21b). A possible design for the one-cavity ball joints (19a) is represented in more detail in figure 12. In this possible embodiment, the vertical rods (20) have respective spherical ends which are fitted inside respective one-cavity ball joints (19a), wherein the spherical ends can rotate within each spherical cavity, meanwhile the rest of horizontal rods (20) are fixed to the respective one-cavity ball joints (19a). These one-cavity ball joints (19a) are configured to allow "Z" axis to tilt, meanwhile the X-Y plane remains always horizontal.

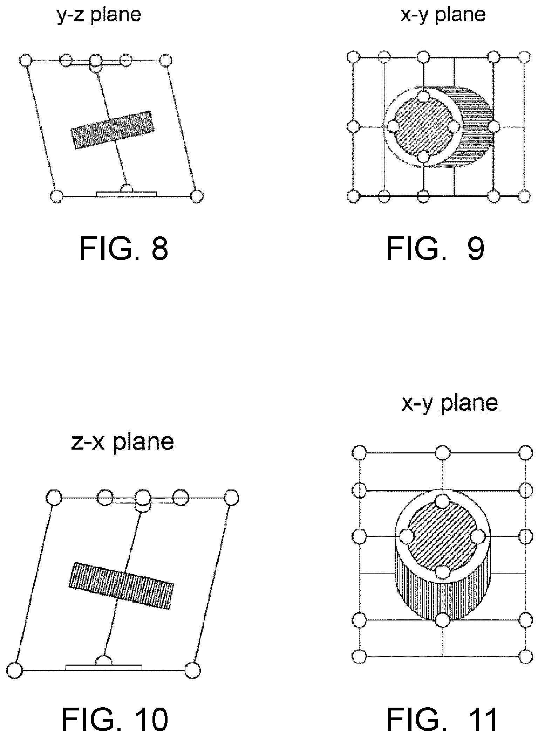

The articulated frame (16) is hollow to be able to contain the rotor (14) and the spin axis (15). It is deformable parallel to the horizontal plan and may acquire parallelepipedal shapes that impose rotations of the rotor (14) and the spin axis (15) of a stabilizing gyroscope. With reference to figures 8 to 11, two possible deformations of the articulated frame (16) are shown: a first deformation where an external reaction force ($F_Y$) is applied in the "-Y" direction and a second case where an external reaction force ($F_X$) is applied in the "-X" direction. It can be seen how the spin axis (15) and the rotor (14) are titled together with the articulated frame (16), due to the fact that they are fixedly mounted in the center of the interior of the 3D articulated frame (16). Therefore, the inclination of the two opposed side faces (16a) of the cubic frame (around ±20-30° in this example with respect to the vertical) is exactly the same as the inclination of the spin axis and the rotor. The same applies regarding the inclination of the two other opposed side faces (16a) of the cubic frame (16) (around ±20-30° in this example with respect to the vertical) which is exactly the same as the inclination of the spin axis (15) and the rotor (14).

With reference to figure 6, a schematic view of the overall control of the stick mechanical stability (10) of the present invention is represented. The whole system, i.e. the inclination detection system (23), the controller (24), the servomotor(s) and the moving mandible and the stabilizing gyroscope (14, 15) are all assembled and working inside the stick (10), located in the center of the drawing. The stabilizing system (22) is in a lower region of the stick (10), meanwhile the inclination detection system (23) in an upper region. The control loop is represented around the central figure of the stick (10). The main steps that the stick (10) of the invention performs are placed in respective squares which are connected by means of arrows following a clockwise direction. First, the inclination detection system (23) is placed in the top position. Next, the controller, which, at the same time, is connected to the servomotor(s) that applies a certain angular movement to the mandibles. Afterwards, the rotor and the spin axis of the stabilizing gyroscope system (22) tilt. Finally, the stabilizing gyroscope precession phenomena counteracts the stick inclination at the bottom part of the stick.

Various modifications to the above invention will become apparent to those skilled in the art, all of which are intended to fall within the scope of the present invention as defined in the appended claims.

**Claims**

1. A gait-assisting stick (10) for helping to lift the stick (10) towards a vertical orientation when tilted with respect to the horizontal plane (or to the gravity field), **characterized in that** it comprises, at least:

   - an elongated member extending along a longitudinal direction, having an upper end (12) and a lower end (11), wherein a portion (13) disposed at the lower region of the elongated member is configured and dimensioned for receiving, at least, a stabilizing system (22);
   - an inclination detection system (23), comprising a first gyroscopic system, for the detection of, at least, the inclination of the stick with respect to the horizontal plane (or to the gravity field);
   - a stabilizing system (22), comprising a second gyroscopic system including, at least, a stabilizing gyroscope having a spinning rotor (14) with its spin axis (15) that can be reoriented according to the detected inclination, wherein the stabilizing system is disposed at the lower region of the elongated member, and wherein the stabilizing system (22) is configured for receiving specific displacements or corresponding forces from a control system connected to the stabilizing gyroscope, which tilts the spin axis (15) and the spinning rotor (14) of the stabilizing gyroscope to a specific inclination with respect to the horizontal plane, which generates an additional torque ($\tau$) and an additional angular momentum (L) that further imposes a controlled gyroscopic precession ($\omega_p$) that forces the vertical reorientation of the stick (10) from its lower region, to maximize the lever arm effect at the upper end of the stick; and
   - a control system for connecting electronically the mechanical induction of the imposed precession in the stabilizing system (22) with the inclination detection system (23) and for receiving orientation signals from the inclination detection system (23) according to the current tilt of the stick (10) with respect to the horizontal plane (or to the gravity field) and sending displacement or corresponding force signals to the stabilizing system (22).

2. The gait-assisting stick according to claim 1, wherein the stabilizing system (22) comprises at least:

   - a stabilizing gyroscope being disposed inside an articulated frame (16), wherein the spin axis (15) of the stabilizing gyroscope follows the deformation imposed to the articulated frame (16), wherein the spin axis (15) is fully centered within the articulated frame (16), so that the spin axis (15) is always kept aligned with the side edges (16a) of the articulated frame (16), both in the deformed and undeformed dispositions of the frame (16);
   - an articulated frame (16) configured for, under the action of different displacements or corresponding reaction forces, adopting distorted shape, wherein the top and bottom surfaces of the volume enclosed in the frame remain parallel to the horizontal plan, therefore acquiring shapes that impose rotations of the spinning rotor (14) and the spin axis (15) of the stabilizing gyroscope;
   - one or more servomotors (18) for transmitting a specific movement or corresponding force to a plurality of mandibles (17) depending on the input signals received from the control system;
   - a plurality of mobile mandibles (17), each one with two opposed legs in contact with the upper part of the frame, which are configured to move the upper edges of the frame to generate the desired distorted shape and, therefore, orientation of the stabilizing gyroscope, according to a specific displacement or corresponding force control; and
   - elements for activating the fast spinning of the spinning rotor (14).

3. The gait-assisting stick according to claim 2, wherein the articulated frame (16) is a 3D structure constituted by a plurality of elongated rods (20) being connected and articulated among each other, and forming the sides of the articulated frame (16), wherein the articulations among the elongated rods (20) comprise ball joints, thus allowing the deformation of the articulated frame (16).

4. The gait-assisting stick according to claim 3, wherein the articulated frame (16) has a cubic or any other functional polyhedral shape.

5. The gait-assisting stick according to claim 3, wherein both the plurality of elongated rods (20) and the ball joints (19) are made of a non-magnetic material, except the upper and lower spherical heads of the spinning axis of the stabilizing gyroscope.

6. The gait-assisting stick according to claim 5, wherein non-magnetic material can be polymeric or a metallic alloy.

7. The gait-assisting stick according to claim 2, wherein the system that moves the mandibles (17) and the bottom edges of the frame are connected to a system that ensures, at least, a rigid body motion that follows the motion of the elongated member of the stick (10).

8. The gait-assisting stick according to claim 2, wherein the elements for activating the spin of the rotor of the stabilizing system are mounted either around the rotor (14) or around the spin axis (15).

9. The gait-assisting stick according to claim 1, wherein the stabilizing system (22) is integrally disposed within the lowest region of the elongated member, or around mid-height whenever convenient and depending on the dimensions of the stick.

10. The gait-assisting stick according to claim 1, wherein the inclination detection system (23) comprises, at least, a system of gyroscopes for the detection of inclination of the stick (10), and optionally of acceleration of the stick (10).

11. The gait-assisting stick according to claim 1 or 10, wherein the inclination detection system (23) is disposed within the upper region of the elongated member.

12. A walking stick, comprising the gait-assisting stick (10) defined in any one of the preceding claims.

13. A crutch, comprising the gait-assisting stick (10) defined in any one of claims 1 to 11.

14. A walker for stability, wherein one or more of its legs comprise the gait-assisting stick (10) defined in any one of claims 1 to 11.

15. A Nordic walking pole, a trekking/hiking pole or a ski pole, comprising the gait-assisting stick (10) defined in any one of claims 1 to 11.

FIG. 1

FIG. 2

FIG. 3

EP 3 957 292 A1

**FIG. 4**

**FIG. 5**

FIG. 6

FIG. 7

y-z plane

FIG. 8

x-y plane

FIG. 9

z-x plane

FIG. 10

x-y plane

FIG. 11

FIG. 12

Europäisches
Patentamt

European
Patent Office

Office européen
des brevets

# EUROPEAN SEARCH REPORT

**Application Number**

EP 20 38 2762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 207 722 058 U (UNIV SOUTHEAST) 14 August 2018 (2018-08-14) * paragraphs [0018] - [0027]; figures * ----- | 1-15 | INV. A61H3/02 A45B3/00 G01C19/30 |
| A | CN 110 575 371 A (UNIV DALIAN MINZU) 17 December 2019 (2019-12-17) * paragraphs [0067] - [0084]; figures * ----- | 1-15 | |
| A | CN 107 485 540 B (UNIV ZHEJIANG CITY COLLEGE) 13 December 2019 (2019-12-13) * paragraphs [0023] - [0054]; figures * ----- | 1-15 | |
| A | GB 2 506 726 A (ANDREEV SERGEY NIKOLAEVICH [RU]) 9 April 2014 (2014-04-09) * pages 5-20; figures * ----- | 1-15 | |

|  |
|---|
| TECHNICAL FIELDS SEARCHED (IPC) |
| A61H A45F G01C A45B |

The present search report has been drawn up for all claims

| Place of search | Date of completion of the search | Examiner |
|---|---|---|
| Munich | 5 February 2021 | Teissier, Sara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**EP 3 957 292 A1**

## ANNEX TO THE EUROPEAN SEARCH REPORT
## ON EUROPEAN PATENT APPLICATION NO.

EP 20 38 2762

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2021

| Patent document cited in search report | | Publication date | Patent family member(s) | | Publication date |
|---|---|---|---|---|---|
| CN 207722058 | U | 14-08-2018 | NONE | | |
| CN 110575371 | A | 17-12-2019 | NONE | | |
| CN 107485540 | B | 13-12-2019 | NONE | | |
| GB 2506726 | A | 09-04-2014 | CN | 105531182 A | 27-04-2016 |
| | | | EA | 201300914 A1 | 30-01-2015 |
| | | | GB | 2506726 A | 09-04-2014 |
| | | | US | 2016031515 A1 | 04-02-2016 |
| | | | WO | 2015009198 A1 | 22-01-2015 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030089389 A1